# EUROPEAN PATENT APPLICATION

(11) **EP 2 891 974 A1**
(43) Date of publication of application: **08.07.2015**
(21) Application number: 14195881.9
(22) Date of filing: 02.12.2014
(51) Int. Cl.: G06F 3/16, H04N 21/40

(54) **Display apparatus which operates in response to voice commands and control method thereof**

(30) Priority: 06.01.2014 KR 20140001303; 25.11.2014 KR 20140165212
(71) Applicant: Samsung Electronics Co., Ltd, Gyeonggi-do 443-742 (KR)
(72) Inventor: Jeong, Ju-young, Gyeonggi-do (KR)
(74) Representative: Appleyard Lees

(57) **Abstract**

A display apparatus and a method of controlling the display apparatus are provided. The display apparatus includes: a display configured to display an image; a voice receiver configured to receive a user's voice; a storage configured to store information about the user's voice; and a controller configured to select a first operation of the display apparatus in response to a user's input, receive a first utterance of the user's voice corresponding to the selected first operation, store information about the received first uttered voice in the storage, receive a second utterance of the user's voice, and perform the corresponding first operation to be performed if the received second utterance of the user's voice matches the received first utterance of the user's voice.

## Description

### BACKGROUND

### Field

Apparatuses and methods consistent with the exemplary embodiments relate to a display apparatus and a control method thereof, and more particularly to a display apparatus, which operates in response to voice commands of a user, and a control method thereof

### Description of the Related Art

In display apparatuses such as smart televisions (TV), voice recognition techniques have become widespread. To this end, the display apparatus is provided with a microphone. The display apparatus performs voice recognition with regard to a user's voice command input through the microphone. Based on the result of the voice recognition, the display apparatus performs a function provided by the display apparatus in response to the input voice command.

However, a related art display apparatus may not properly perform the voice recognition process in accordance with the tone, intonation, etc. of an individual's voice. Also, a related art display apparatus recognizes only the voice command corresponding to a preset operation, and it is thus inconvenient for a user because the user has to learn and then speak a voice command, or check an available voice command through a menu or the like of the display apparatus and then speak the voice command. Further, a related art display apparatus permits only a voice command corresponding to a preset operation. That is, if an operation is not previously set up for a voice command in the display apparatus even though it is desired by a user, the user has to directly input a command corresponding to the desired operation through a remote controller or the like instead of speaking the voice command. Therefore, it is inconvenient for the user. Also, when a user directly inputs a command through the remote controller or the like, it is inconvenient for the user to perform control and selection many times until a desired operation is found and selected through menu items of a graphical user interface (GUI) provided by the display apparatus.

### SUMMARY

One or more exemplary embodiments may provide a display apparatus, which can perform operations by successfully recognizing the voice commands of many users who have different voice characteristics, and a control method thereof.

According to an aspect of the exemplary embodiments, there is provided a display apparatus, in which a user can give a voice command with regard to operations other than operations previously set up for voice commands, and a control method thereof.

According to another exemplary embodiment, there is provided a display apparatus, in which many operations are conveniently controlled by a user's single voice command, and a control method thereof.

According to an exemplary embodiment, there is provided a display apparatus including: a display configured to display an image; a voice receiver configured to receive a user's voice; a storage configured to store information about the user's voice; and a controller configured to select a first operation of the display apparatus in response to a user's input, receive a first utterance of the user's voice corresponding to the selected first operation, store information about the received user's first voice in the storage, receive a second utterance of the user's voice, and perform the first operation upon a condition that the received second uttered voice matches the received first uttered voice.

The display may include a graphical user interface (GUI) including a menu item for selecting the first operation in response to the user's input.

The storage may store information about the first operation to be selected, and the controller may display a GUI including a menu item corresponding to the first operation based on the stored information in response to a user's request for voice registration.

The controller may further select a second operation to be performed in association with the first operation in response to the user's input, and control the first operation and the second operation to be performed upon a condition that the received second voice matches the received first voice.

The display apparatus may further include a communicator configured to perform an operation for connecting with an external device as the first operation.

The display apparatus may further include: an image sensor configured to perform an operation for generating a photographed image as the first operation; and a communicator configured to transmit the generated photographed image to the external device.

According to an aspect of another exemplary embodiment, there is provided a method of controlling a display apparatus for displaying an image, the method including: selecting a first operation of the display apparatus in response to a user's input; receiving a first utterance of the user's voice corresponding to the selected first operation; storing information about the received user's first voice in a storage; receiving a second utterance of the user's voice; and performing the first operation upon a condition that it is determined based on the stored information that the received second uttered voice matches the received first uttered voice.

The method may further include: displaying a graphical user interface (GUI) including a menu item for selecting the first operation in response to the user's input.

The method may further include receiving a user's request for voice registration, wherein the displaying the GUI may include displaying a GUI including a menu item corresponding to the first operation based on previously stored operations.

The method may further include: selecting a second operation to be performed in association with the first operation in response to the user's input, wherein the performing the first operation may include performing the first operation and the second operation upon a condition that the received second voice matches the first voice.

The method may further include: performing an operation for connecting with an external device as the first operation.

The method may further include: performing an operation for generating a photographed image as the first operation; and transmitting the generated photographed image to an external device.

According to an aspect of another exemplary embodiment, there is provided a method of controlling a display apparatus which displays an image, the method comprising: receiving a user's voice; determining, among a plurality of command words and a plurality of user voice characteristics which are stored in a storage, a command word and a user voice characteristic corresponding to the received user's voice; and performing an operation corresponding to the determined user voice characteristic among a plurality of operations available with regard to the determined command word.

The command word may have a form of a text.

The user voice characteristic may include at least one of intonation and tone of the user's voice.

The controller may control to receive the user's voice in order to store the command word and the user voice characteristic in the storage.

The display may comprise a graphical user interface (GUI) comprising a menu item for selecting the operation in response to the user's input.

The storage may store information about the operation, and the controller may display a GUI comprising a menu item corresponding to the operation based on the stored information in response to a user's request for voice registration.

The controller may further select a first operation to be performed in association with a second operation in response to the user's input, and control the first operation and the second operation corresponding to the received user's voice to be performed.

The display apparatus may further include a communicator configured to connect the display apparatus with an external device as the operation.

The display apparatus may further include an image sensor configured to generate a photographed image as the operation; and a communicator configured to transmit the generated photographed image to an external device.

The display apparatus may further include the storage.

According to an aspect of another exemplary embodiment, there is provided a method of controlling a display apparatus which displays an image, the method comprising: receiving a user's voice; determining, among a plurality of command words and a plurality of user voice characteristics which are stored in a storage, a command word and a user voice characteristic corresponding to the received user's voice; and performing an operation corresponding to the determined user voice characteristic among a plurality of operations available with regard to the determined command word.

The command word may have a form of a text.

The user voice characteristic may include at least one of intonation and tone of the user's voice.

The method may further include receiving the user's voice in order to store the command word and the user voice characteristic in the storage.

The method may further include displaying a graphical user interface (GUI) comprising a menu item for selecting the operation in response to the user's input.

The method may further include receiving a user's request for voice registration, wherein the displaying the GUI may include displaying a GUI comprising a menu item corresponding to the operation based on previously stored operations.

The method may further include selecting a first operation to be performed in association with a second operation in response to the user's input, wherein the performing the operation may include performing the first operation and the second operation corresponding to the received user's voice.

The method may further include performing an operation to connect the display apparatus with an external device as the operation.

The method may further include generating a photographed image as the operation; and transmitting the generated photographed image to an external device.

According to an aspect of another exemplary embodiment, there is provided a method of controlling a display apparatus by voice commands, the method comprising: selecting a first operation in response to a user's input; receiving a first voice utterance corresponding to the first operation from the user; registering information regarding the user's first voice utterance; receiving a second voice utterance from the user; determining that the second voice utterance corresponds to the registered first voice utterance, and performing the first operation upon a condition that the second voice utterance corresponds to the registered first voice utterance.

The method may further include displaying a graphical user interface (GUI) which comprises menus to select the first operation.

The first operation may be an operation for connecting the display apparatus to an external apparatus.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 illustrates a display apparatus according to an exemplary embodiment;
FIG. 2 is a block diagram of the display apparatus according to an exemplary embodiment;
FIG. 3 is a flowchart showing operations of the display apparatus according to an exemplary embodiment;
FIG. 4 illustrates an example of a graphical user interface (GUI) for selecting a first operation, displayed on the display apparatus according to an exemplary embodiment;
FIG. 5 illustrates an example of a guide message for receiving a user's first voice, displayed on the display apparatus according to an exemplary embodiment;
FIG. 6 illustrates an example of a GUI for selecting a plurality of associated operations, displayed on the display apparatus according to an exemplary embodiment;
FIGS. 7 to 9 illustrate examples of various associated operations to be performed corresponding to the registered first voice in the display apparatus according to an exemplary embodiment;
FIG. 10 illustrates an example of voice registration information stored in a storage of the display apparatus according to an exemplary embodiment;
FIG. 11 illustrates a display apparatus according to another exemplary embodiment;
FIG. 12 is a flowchart showing operations of the display apparatus according to another exemplary embodiment; and
FIG. 13 illustrates an example of voice registration information stored in a storage of the display apparatus according to another exemplary embodiment.

### DETAILED DESCRIPTION OF EXEMPLARY EMBODIMENTS

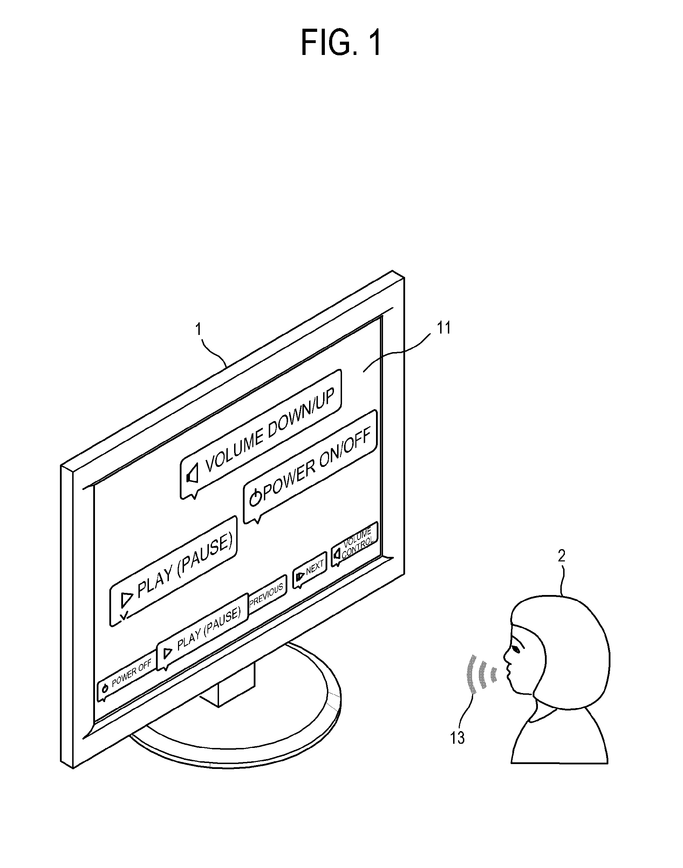

Below, exemplary embodiments will be described in detail. FIG. 1 illustrates a display apparatus according to an exemplary embodiment. The display apparatus 1 may be for example achieved by a television (TV). However, the display apparatus is not limited thereto. The display apparatus 1 displays an image 11 based on a video signal. A user 2 may control the display apparatus 1 with the user's own voice 13 (hereinafter, also referred to as a 'voice command') while viewing the image 11 displayed on the display apparatus 1. The display apparatus 1 receives the voice command 13 of the user 2, recognizes it, and performs an operation corresponding to the recognized voice command 13. For example, the display apparatus 1 may turn up or down the volume, play or pause contents, or power on/off in accordance with the voice command 13.

The display apparatus 1 selects one (hereinafter, also referred to as a 'first operation) among operations, which can be performed in the display apparatus 1, in response to a user's input; receives a user's voice command (hereinafter, also referred to as a 'first voice') corresponding to the selected first operation; stores the corresponding information (of the first voice) (hereinafter, also referred to as ('registration' or 'voice registration'); if there is a subsequent user's voice command (hereinafter, also referred to as a 'second voice'), the display apparatus determines whether the second voice matches the previously registered first voice; and if it is determined that the second voice matches the registered first voice, the display apparatus performs the first operation. Accordingly, although users may have voice characteristics which differ from one another, the first voices directly spoken by each user are registered so that the voice recognition can be successfully performed. Also, the first operation is directly selected by a user, so that a user can freely set up the first operation as desired and give a command for the first operation in his/her voice even though the first operation is not previously set up corresponding to the voice command. Accordingly, there is no need to learn the preset voice command, and a voice command is permitted with regard to operations other than the preset operations, thereby improving convenience for a user.

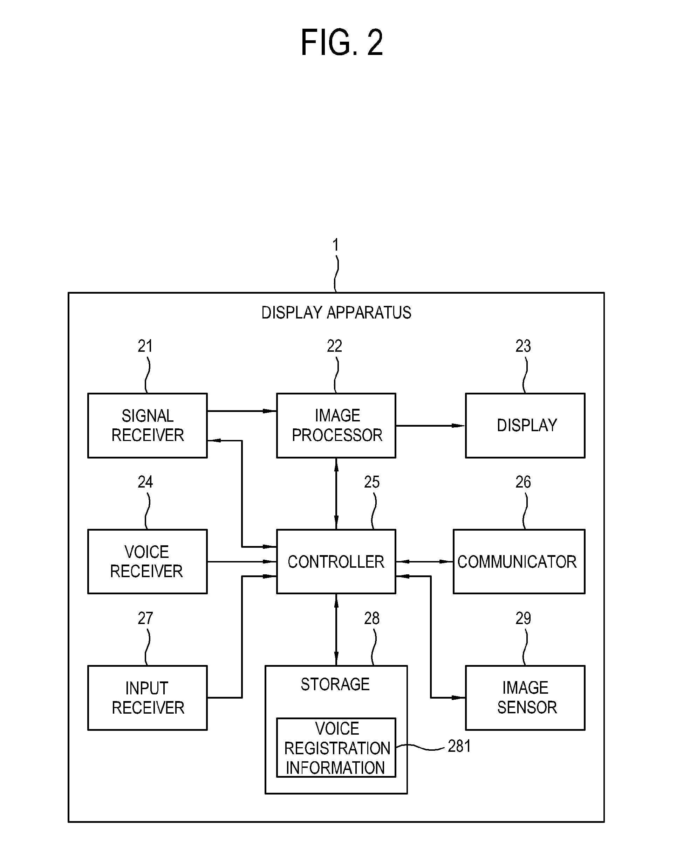

FIG. 2 is a block diagram of the display apparatus according to an exemplary embodiment. The display apparatus 1 may include the signal receiver 21, an image processor 22, a display 23, a voice receiver 24, a controller 25, a communicator 26, an input receiver 27 and a storage 28. However, the elements of the display apparatus 1 are simply exemplary, and may vary as necessary. That is, although it is not shown, at least one element may be excluded from, or a new element may be added to, the elements of the display apparatus 1 shown in FIG. 2.

The signal receiver 21 receives a video signal. The signal receiver 21 may include a tuner to receive a video signal. Under control of the controller 25, the tuner may be tuned to one channel selected among a plurality of channels and receive a video signal of the selected channel. The channel may be selected by a user. The input receiver 27 may receive a user's control input. The input receiver 27 receives a user's control input about the selection of the channel and transmits it to the controller 25. The input receiver 27 includes a control panel to receive a user's control input, or a remote control signal receiver to receive a remote control signal including a user's control input from a remote controller.

Alternatively, the signal receiver 21 may receive a video signal from an imaging device such as a set-top box, a digital versatile disc (DVC), a personal computer (PC), etc.; receive a video signal from a peripheral device such as a smart phone or the like; or receive a video signal from a server through Internet or the like network.

The image processor 22 processes the received video signal to be displayed as an image on the display 23. The image processor 22 may perform image processing, for example, modulation, demodulation, multiplexing, demultiplexing, analog-digital conversion, digital-analog conversion, decoding, encoding, image enhancement, scaling, etc. with respect to the received video signal.

The display 23 displays an image based on the video signal processed by the image processor 22. The display 23 may display the image by using various types of panels, such as liquid crystal display (LCD), plasma display panel (PDP), an organic light emitting diode (OLED), etc. The voice receiver 24 receives a voice command spoken by a user. The voice receiver 24 may include a microphone.

The controller 25 selects a first operation of the display apparatus 1 in accordance with a user's input, receives, and registers a first utterance of the user's voice corresponding to the first operation. If it is determined that a second utterance of the user's voice received thereafter matches the previously registered first uttered voice, the controller 25 controls the corresponding first operation to be performed. The controller 25 stores information 281 about the user's first uttered voice corresponding to the selected first operation (hereinafter, referred to as 'voice registration information') in the storage 28, thereby performing the voice registration. The storage 28 stores information about the selected first operation and a user's first uttered voice as the voice registration information 281, and may be achieved by a flash memory, a hard disk drive, or a similar nonvolatile memory. The controller 25 may include a control program for performing such control, nonvolatile and volatile memories for storing the entire or a part of the control program, and a microprocessor for executing the control program.

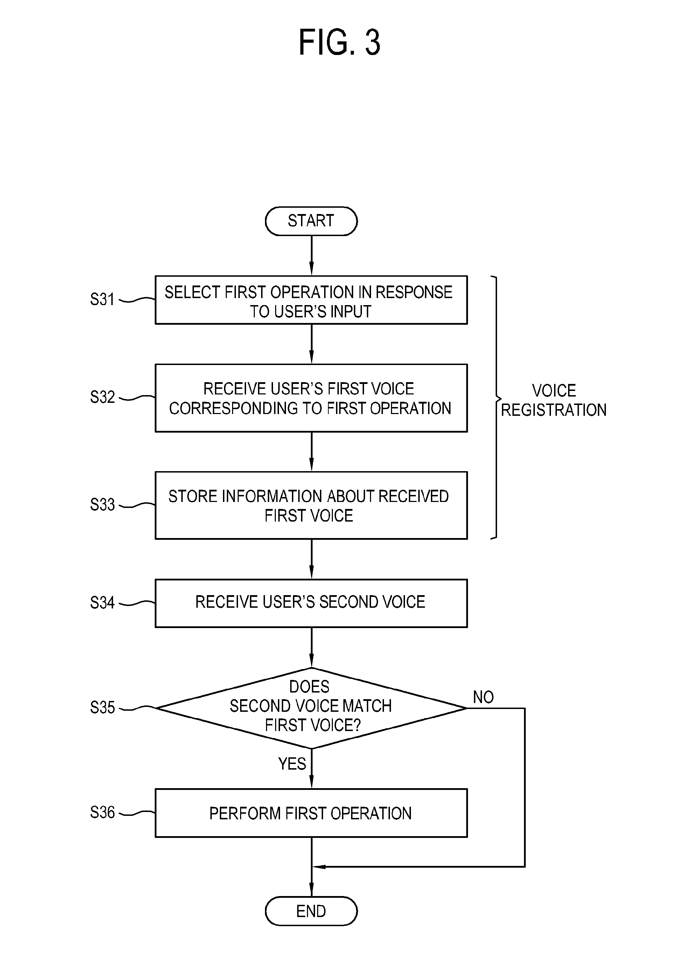

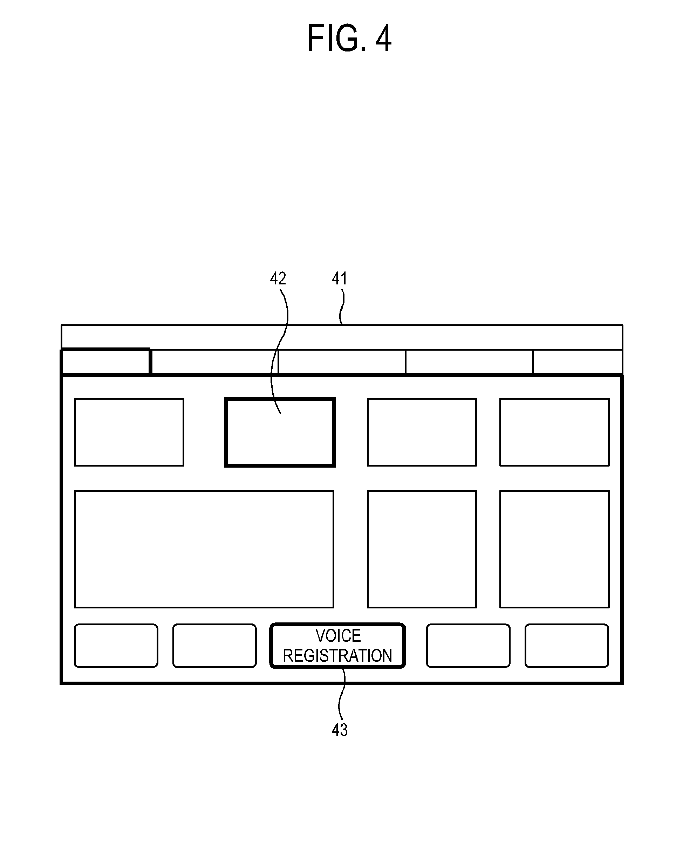

FIG. 3 is a flowchart showing operations of the display apparatus 1 according to an exemplary embodiment. First, at operation S31, the display apparatus 1 selects the first operation targeted for the voice registration in accordance with a user's input. The display apparatus 1 may display a GUI for allowing a user to select the first operation. FIG. 4 illustrates an example of a GUI 41 for selecting the first operation, displayed on the display apparatus according to an exemplary embodiment. The GUI 41 may include a plurality of first menu items 42. Each first menu item 42 may correspond to a certain operation performed in the display apparatus 1. The operation of the display apparatus 1 may include all operations that can be performed by the display apparatus 1, for example, video on demand (VOD) execution, movie mode setting, certain menu entry, etc. The first menu item 42 may display information about the corresponding operation in the form of a text, an image, etc. A user may select the first menu item 42 corresponding to the first operation targeted for the voice registration among the plurality of first menu items. The first menu item 42 may be selected through the input receiver 27. The display apparatus 1 may highlight the first menu item 42 selected corresponding to a user's input received through the input receiver 27.

The GUI 41 may include a second menu item 43 to request to proceed with the voice registration. A user may select the second menu item 43 to request to proceed with the voice registration. When the second menu item 43 is selected, the display apparatus 1 proceeds with the voice registration for the first operation corresponding to the first menu item 42 selected by a user. There is no limit to the order in which the first menu item 42 and the second menu item 43 are selected. For example, the first menu item 42 corresponding to the first operation may be selected first, and then the second menu item 43 may be selected. Alternatively, the second menu item 43 may be selected first, and then the first menu item 42 may be selected.

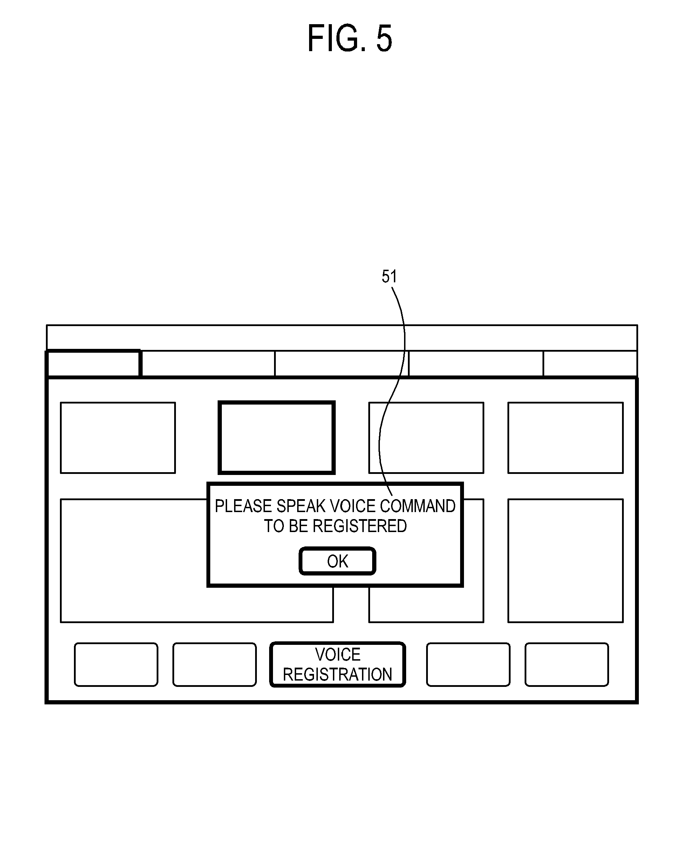

Next, referring back to FIG. 3, at operation S32, the display apparatus 1 receives a first utterance of the user's voice corresponding to the selected first operation. The display apparatus 1 may display a guide message for receiving a first utterance of the user's voice corresponding to the first operation. FIG. 5 illustrates an example of a guide message 51 for receiving a first utterance of the user's voice, displayed on the display apparatus 1 according to an exemplary embodiment. A user utters the first voice to be designated for the first operation. For example, a user may speak a voice command such as 'VOD execution', 'movie mode', etc. as the first voice. The display apparatus 1 receives a user's first uttered voice corresponding to the first operation through the voice receiver 24.

Next, referring back to FIG. 3, at operation S33, the display apparatus 1 stores information about the received user's first uttered voice. The display apparatus 1 matches the information about the received user's first uttered voice with the information about the first operation, and stores it in the storage 28. As the information about the first uttered voice is stored, the voice registration for the first operation is completed.

Next, at operation S34, the display apparatus 1 receives a second utterance of the user's voice. Next, at operation S35, the display apparatus 1 determines whether or not the received second voice matches the previously registered first voice. If the received second voice does not match with the previously registered first voice at operation S35, the display apparatus 1 terminates the operation. If it is determined at operation S35 that the received second voice matches the previously registered first voice, at operation S36 the display apparatus 1 performs the first operation corresponding to the registered first voice. For example, if it is determined that the second voice spoken by a user matches 'VOD execution' registered as the first voice, the display apparatus 1 performs the first operation registered corresponding to the 'VOD execution.'

The voice registration may be achieved with regard to a plurality of operations. That is, a second operation (hereinafter, also referred to as a 'second operation') performed in association with the first operation may be registered corresponding to one registered first voice. Therefore, if the first voice registered later is spoken, the display apparatus 1 performs the corresponding first operation and the second operation associated with the first operation.

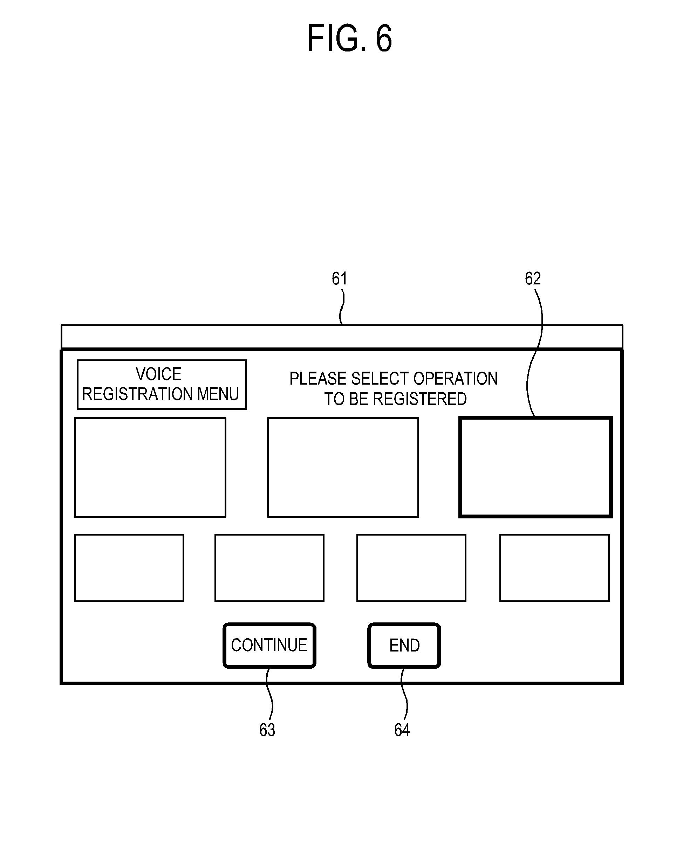

FIG. 6 is an example of a GUI 61 for selecting a plurality of associated operations displayed by the display apparatus 1 according to an exemplary embodiment. The GUI 61 includes the plurality of first menu items 62 corresponding to operations of the display apparatus 1. A user may select the first operation and second operation desired to be registered through the plurality of first menu items 62. The number of associated operations is not limited to two. Alternatively, three or more associated operations may be registered. If all the associated operations to be registered are selected on the currently displayed GUI 61, a user selects a third menu item 64 to thereby finish the selection of the associated operations to be registered. If a user does not select all the associated operations to be registered through the currently displayed GUI 61 but continues to select the associated operations to be registered, the user can select a fourth menu item 63. If the fourth menu item 63 is selected, the display apparatus 1 provides a new GUI including a menu item corresponding to additional associated operations, thereby continuously proceeding with the selection of the associated operations to be registered.

If there is a user's request for the voice registration, the display apparatus 1 may display the first menu item 62 corresponding to a plurality of preset associated operations. That is, the plurality of associated operations may be previously set up as needing voice registration, and corresponding information may be stored in the storage 28. Thus, when a user selects the associated operations to be registered, it is more convenient to select the desired associated operations with reference to the associated operations provided by the display apparatus 1.

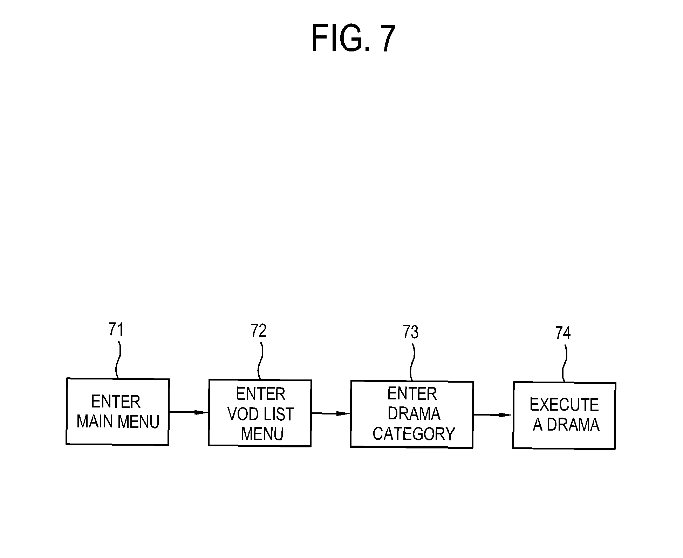

FIGS. 7 to 9 illustrate examples of various associated operations to be performed corresponding to the registered first voice in the display apparatus 1 according to an exemplary embodiment. Here, the associated operations corresponding to the voices are registered through the processes described with reference to FIGS. 3 to 6. The associated operations may be automatically performed in sequence if the registered first voice is spoken. First, referring to FIG. 7, the display apparatus 1 may for example associatively perform an operation 71 of entering a 'main menu' in response to a first user's first registered voice like 'VOD execution', an operation 72 of entering a 'VOD list menu', an operation 73 of entering a 'drama category', and an operation 74 of executing an 'A drama.'

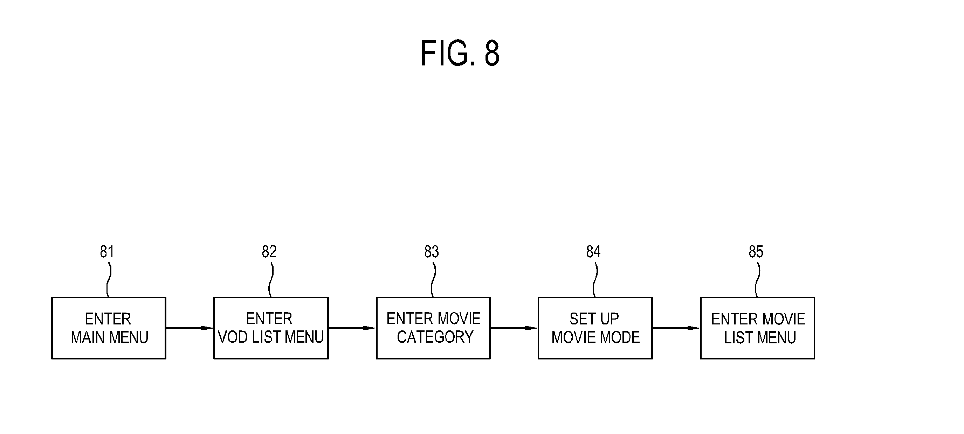

Referring to FIG. 8, the display apparatus 1 may for example associatively perform an operation 81 of entering a 'main menu' in response to the first user's first registered voice which registered an operation such as 'movie view', an operation 82 of entering a 'VOD list menu', an operation 83 of entering a 'movie category', and an operation 84 of setting up a movie mode, and an operation 85 of entering a 'movie list menu.' In the operation 84 of setting up the movie mode, the size of the subtitle may be set up to have a font of `10', the language of the subtitle may be selected to be 'English', and the image quality may be set up to have the 'movie mode'.

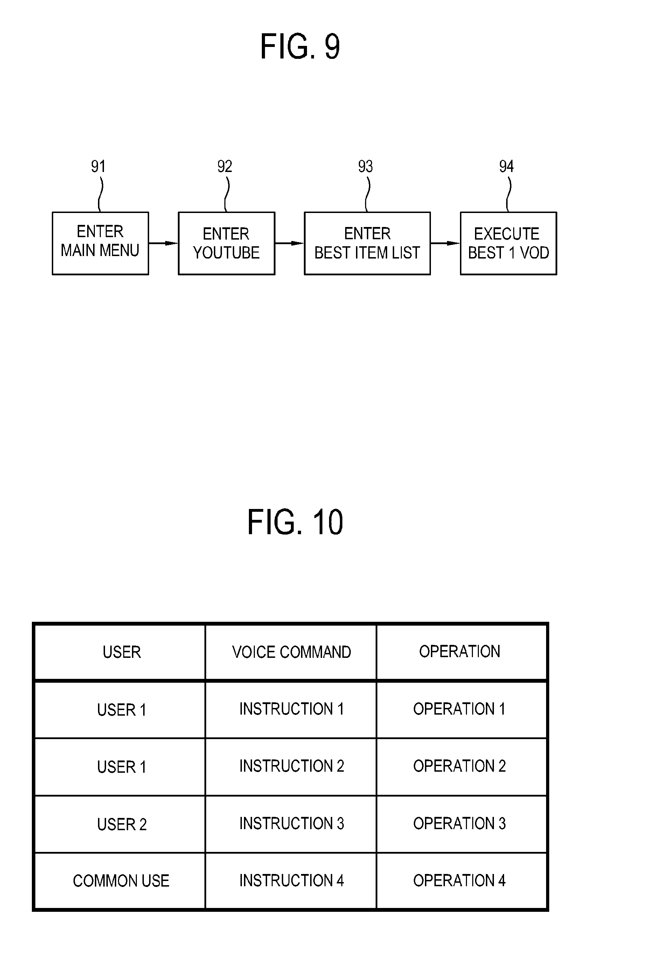

Referring to FIG. 9, the display apparatus 1 may for example, associatively perform an operation 91 of entering a 'main menu' in response to a second user's second registered voice, which registered an operation such as 'VOD execution', an operation 92 of entering a 'YouTube', an operation 93 of entering a 'Best Item list', and an operation 94 of executing 'Best1 VOD'. In the examples shown in FIG. 7 and FIG. 9, both the registered first voices correspond to the same command word as 'VOD execution', but are different in the characteristic of the voice between the first user and the second user (referred to as a 'user voice characteristic'). Therefore, it is possible to distinguish between two voice commands. As the registered voices are distinguished between users, the voice registration according to this exemplary embodiment may for example be utilized in login operations for individual users.

FIG. 10 illustrates an example of voice registration information 281 stored in the storage 28 of the display apparatus according to an exemplary embodiment. As shown in FIG. 10, the voice registration information 281 includes fields of a 'user', a 'voice command' and an 'operation'. The 'user' field refers to information about a user who registers his/her voice, for example, a 'user1', a ' user2', 'common use', etc. The 'voice command' field refers to a registered voice command, for example an 'instruction1', an 'instruction2', an 'instruction3', an 'instruction4', etc. The 'operation' field refers to information about the operations of the display apparatus 1 corresponding to the registered voice command, for example an `operation1', an 'operation2', an 'operation3', an 'operation4', etc. The voice commands registered corresponding to the `user1' and the 'user2' are personally usable according to users, but the voice commands registered for 'common use' are usable by all the users.

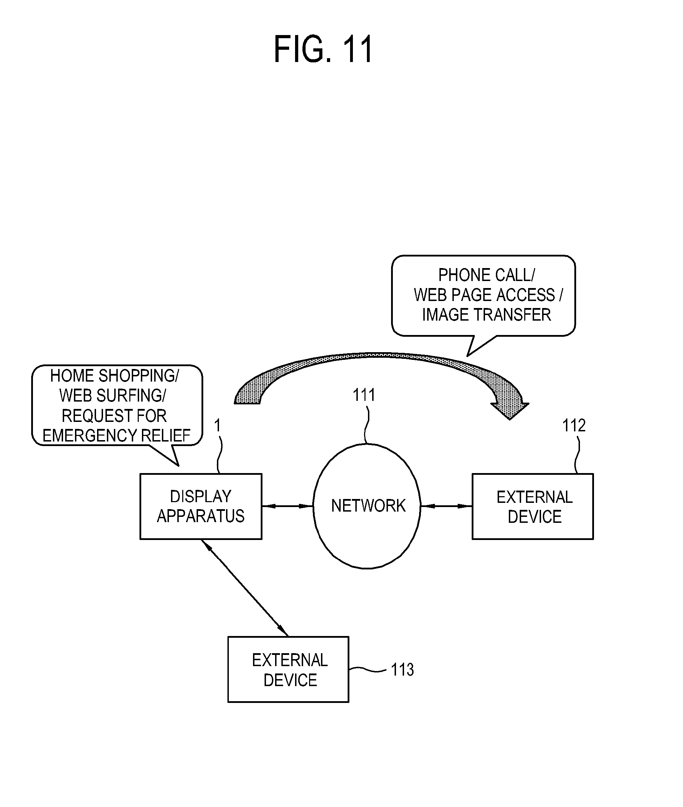

FIG. 11 illustrates a display apparatus 1 according to another exemplary embodiment. The display apparatus 1 shown in FIG. 11 may perform the first operation by connecting with external devices 112 and 113 as the registered first voice is spoken. The display apparatus 1 may connect with the external device 112 through a network 111, or may connect with an adjacent external device 113. For example, the first operation corresponding to the registered first uttered voice may include an operation for communicating with the external device 112 of a seller while viewing a home-shopping channel on the display apparatus 1. According to another example, the first operation may, for example, include an operation for accessing a certain web page of the external device 112, i.e., a web server while surfing the web on the display apparatus 1. According to still another example, the first operation may for example include an operation for receiving or transmitting a moving-image file or the like from, or to, the adjacent external device 113. According to yet another example, the first operation may for example include an operation for communicating with the external devices 112 or 113 by making a phone call for emergency relief. In this case, the display apparatus 1 may further include a communicator 26 for communicating with the external devices 112, 113 as shown in FIG. 2. Further, the first operation may, for example, transmit an image acquired by photographing a user's current environment to the external devices 112, 113 during emergency situations. In this case, the display apparatus 1 may further include an image sensor 29 for generating a photographed image as shown in FIG. 2. Thus, according to an exemplary embodiment, the voices corresponding to various operations of the display apparatus 1 are previously registered, and as necessary the operation is performed when the corresponding registered voice is spoken, so that the display apparatus 1 can be more conveniently and helpfully used.

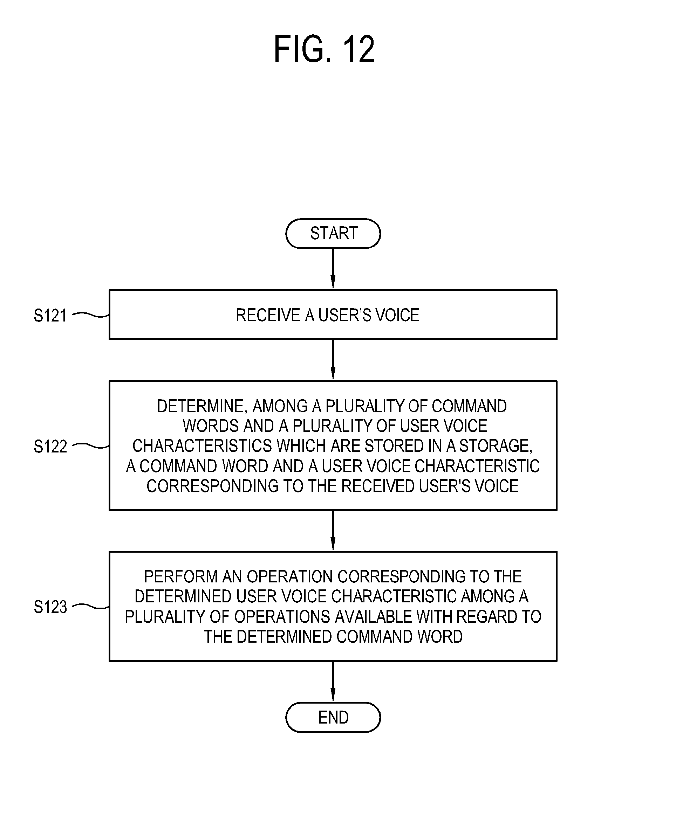

FIG. 12 is a flowchart showing operations of the display apparatus 1 according to another exemplary embodiment. First, at operation S121, the display apparatus 1 receives a user's voice. Next, at operation S122, the display apparatus 1 determines, among a plurality of command words and a plurality of user voice characteristics which are stored in a storage, a command word and a user voice characteristic corresponding to the received user's voice. The display apparatus 1 may include the storage 28 which stores the plurality of command words and the plurality of user voice characteristics. Alternatively, the storage in which the plurality of command words and the plurality of user voice characteristics are stored may be provided in a device other than the display apparatus 1. For example, the display apparatus 1 may use the plurality of command words and the plurality of user voice characteristics which are stored in the storage of an external device by communicating with the external device through the communicator 26.

The display apparatus 1 may store the plurality of command words and the plurality of user voice characteristics in the storage 28 as the voice registration information which is described with reference to the storage 28 illustrated in FIG. 2. The display apparatus 1 may perform the voice registration which is described with reference to FIG. 3 in order to store the plurality of command words and the plurality of user voice characteristics in the storage 28. With regard to the voice registration of an exemplary embodiment, the GUIs which are described with reference to FIGS. 4 to 6 may be used. The voice registration of an exemplary embodiment may be performed on the voice command and the operation which are described with reference to FIGS. 7 to 9.

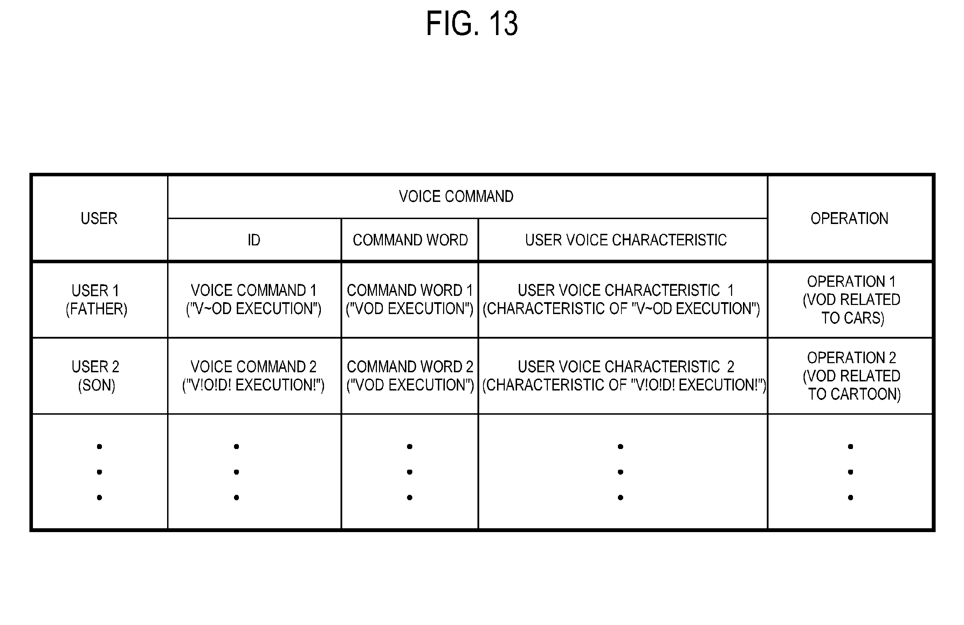

FIG. 13 illustrates an example of the voice registration information stored in a storage of the display apparatus according to another exemplary embodiment. The voice registration information 281 as shown in FIG. 13 includes fields of a 'user', a 'voice command' and an 'operation'. The 'user' field refers to information about a user who registers his/her voice, for example, a `user1', a ' user2', 'common use', etc. For example, the 'user1' indicates a father among users of the display apparatus 1 and the ' user2' indicates a son.

The 'voice command' field may include fields of an 'identifier (ID)', a 'command word' and a 'user voice characteristic'. The 'ID' field refers to IDs of the registered voice commands, for example, a 'voice command 1', 'voice command2', etc. Specifically, the 'voice command1' may be a voice command of "V∼OD execution" which is uttered and registered by a father, and the 'voice command2' may be a voice command of "V!O!D! execution!" which is uttered and registered by a son.

The 'command word' field refers to command words corresponding to the voice commands of the IDs, for example, a 'command word1', a 'command word2', etc. Each of the command words may have a form of a text. The display apparatus 1 may convert the received user's voice into a text in order to determine a command word corresponding to the received user's voice. For example, both of the voice command of "V∼OD execution" which is uttered and registered by the father and the voice command of "V!O!D! execution!" which is uttered and registered by the son correspond to the same text of 'VOD execution'.

The 'user voice characteristic' field refers to characteristics of the user's voice corresponding to the voice commands, for example, a 'user voice characteristic1', a 'user voice characteristic2', etc. Specifically, the 'user voice characteristic1' may be the voice characteristic corresponding to the voice command of "V∼OD execution" which is uttered and registered by the father, and the 'user voice characteristic2' may be the voice command of "V!O!D! execution!" which is uttered and registered by the son. The user voice characteristic may include at least one of intonation and tone of the user's individual voice. The same text of 'VOD execution' may be uttered as "V∼OD execution" or "V!O!D! execution!" according to the characteristic of the user's individual voice, and the uttered voice commands may be different from each other with regard to at least one of the intonation and the tone of the user's individual voice. During the voice registration, the display apparatus 1 may determine the user voice characteristic of the received user's voice and store information on the determined user voice characteristic as information on the 'user voice characteristic' field.

The 'operation' field refers to information about the operations of the display apparatus 1 corresponding to the registered voice command, for example an 'operation1 an 'operation2', etc. Specifically, the `operation1' may be a 'VOD related to cars' corresponding to the voice command of "V∼OD execution" which is uttered and registered by the father, and the 'operation2' may be a 'VOD related to cartoons' corresponding to the voice command of "V!O!D! execution!" which is uttered and registered by the son.

Referring back to FIG. 12, at operation S122, the display apparatus 1 determines, among a plurality of command words and a plurality of user voice characteristics which are stored in a storage, a command word and a user voice characteristic corresponding to the received user's voice. The display apparatus 1 may refer to the voice registration information 281 stored in the storage 28 in order to determine the command word and the user voice characteristic corresponding to the received user's voice. The display apparatus 1 may determine a text by converting the received user's voice and determine the user voice characteristic such as the intonation, tone, etc from the received user's voice. The display apparatus 1 may compare the determined text and, for example, the 'command word1' of the voice registration information 281 stored in the storage 28 in order to determine the command word corresponding to the received user's voice. Also, the display apparatus 1 may compare the determined user voice characteristic and, for example, the 'user voice characteristic1' of the voice registration information 281 stored in the storage 28 in order to determine the user voice characteristic corresponding to the received user's voice.

Next, at operation S123, the display apparatus 1 performs an operation corresponding to the determined command word and the determined user voice characteristic. In other words, the display apparatus 1 performs an operation corresponding to the determined user voice characteristic among a plurality of operations available with regard to the determined command word. The display apparatus 1 may perform one of a plurality of operations available for the determined command word with reference to the voice registration information 281 stored in the storage 28, where the performed operation corresponds to the determined user voice characteristic. For example, if the determined command word is 'VOD execution' and the determined user voice characteristic is 'user voice characteristic1' corresponding to "V∼OD execution", the display apparatus 1 performs 'operation1 ('VOD related to cars')' corresponding to 'command word1 ("V∼OD execution")'. Alternatively, if the determined command word is 'VOD execution' and the determined user voice characteristic is 'user voice characteristic2' corresponding to "V!O!D! execution!", the display apparatus 1 performs 'operation2 ('VOD related to cartoons')' corresponding to 'command word2 ("V!O!D! execution!")'.

According to an exemplary embodiment, since a voice command of a received user's voice is not determined only by a command word but also determined by a user voice characteristic, different operations can be performed according to a user's individual voice, even though the command word is the same. Accordingly, the display apparatus 1 can register voice commands uniquely for each user, and it is more convenient for users and more reliable on voice recognition, compared to determination of a voice command only by a command word.

As described above, according to an exemplary embodiment, voice commands from many users who have different voice characteristics can be successfully recognized, thereby leading to the performance of the corresponding operations.

Also, according to an exemplary embodiment, there are provided a display apparatus and a control method thereof, in which a user can give a command in a voice with regard to operations other than the operations previously set up corresponding to the voice commands.

Also, according to an exemplary embodiment, many operations are conveniently controlled by a user's single voice command.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display configured to display an image;
a voice receiver configured to receive a user's voice; and
a controller configured to determine, among a plurality of command words and a plurality of user voice characteristics which are stored in a storage, a command word and a user voice characteristic corresponding to the user's voice received by the voice receiver, and perform an operation corresponding to the determined user voice characteristic among a plurality of operations available with regard to the determined command word.

2. The display apparatus according to claim 1, wherein the command word has a form of a text.

3. The display apparatus according to claim 1 or 2, wherein the user voice characteristic comprises at least one of intonation and tone of the user's voice.

4. The display apparatus according to one of claims 1 to 3, wherein the controller controls to receive the user's voice in order to store the command word and the user voice characteristic in the storage.

5. The display apparatus according to claim 4, wherein the display comprises a graphical user interface (GUI) comprising a menu item for selecting the operation in response to the user's input.

6. The display apparatus according to claim 5, wherein the storage stores information about the operation, and
the controller displays a GUI comprising a menu item corresponding to the operation based on the stored information in response to a user's request for voice registration.

7. The display apparatus according to claim 4, wherein the controller further selects a first operation to be performed in association with a second operation in response to the user's input, and controls the first operation and the second operation corresponding to the received user's voice to be performed.

8. The display apparatus according to one of claims 1 to 7, further comprising a communicator configured to connect the display apparatus with an external device as the operation.

9. The display apparatus according to one of claims 1 to 8, further comprising:
an image sensor configured to generate a photographed image as the operation; and
a communicator configured to transmit the generated photographed image to an external device.

10. A method of controlling a display apparatus which displays an image, the method comprising:
receiving a user's voice;
determining, among a plurality of command words and a plurality of user voice characteristics which are stored in a storage, a command word and a user voice characteristic corresponding to the received user's voice; and
performing an operation corresponding to the determined user voice characteristic among a plurality of operations available with regard to the determined command word.

11. The method according to claim 10, wherein the command word has a form of a text.

12. The method according to claim 10 or 11, wherein the user voice characteristic comprises at least one of intonation and tone of the user's voice.

13. The method according to one of claims 10 to 12, further comprising: receiving the user's voice in order to store the command word and the user voice characteristic in the storage.

14. The method according to claim 13, further comprising: displaying a graphical user interface (GUI) comprising a menu item for selecting the operation in response to the user's input.

15. The method according to claim 14, further comprising: receiving a user's request for voice registration,
wherein the displaying the GUI comprises displaying a GUI comprising a menu item corresponding to the operation based on previously stored operations.
